# EUROPÄISCHE PATENTSCHRIFT

(11) **EP 1 060 948 B1**
(45) Veröffentlichungstag und Bekanntmachung des Hinweises auf die Patenterteilung: **06.09.2006**
(21) Anmeldenummer: 00112213.4
(22) Anmeldetag: 07.06.2000
(51) Int. Cl.: B60Q 1/32

(54) **Vorrichtung zum Beleuchten eines Vorfeldes eines öffenbaren Fahrzeugteiles**
Lighting device for the area in front of a vehicle
Dispositif d'éclairage des abords d'un véhicule

(30) Priorität: 19.06.1999 DE 19928201
(43) Veröffentlichungstag der Anmeldung: 20.12.2000
(73) Patentinhaber: Hella KGaA Hueck & Co., 59552 Lippstadt (DE)
(72) Erfinder: Köpfer, Frank, 79872 Bernau (DE); Zwick, Hubert, 70173 Stuttgart (DE)
(74) Vertreter: Patent- und Rechtsanwaltssozietät Maucher, Börjes & Kollegen

(56) Entgegenhaltungen:
- EP-A- 0 926 004
- DE-A- 4 305 653
- DE-A- 19 707 543
- FR-A- 1 518 902
- US-A- 5 709 453

## Beschreibung

Die Erfindung betrifft eine Vorrichtung zum Beleuchten eines Vorfeldes eines öffenbaren Fahrzeugteiles mit den Merkmalen des Oberbegriffs von Anspruch 1, wie sie aus der US-A-5 709 453 bekannt sind.

Aus der DE-PS 919 691 ist eine Vorrichtung zur Beleuchtung an der Außenseite eines Kraftfahrzeuges bekannt, die in erster Linie zur Beleuchtung des Türgriffes dient. Dabei ist eine Lichtquelle in dem nach außen von der Fahrzeugaußenhaut abstehenden Türgriff angeordnet. Der Türgriff weist miteinander fluchtende Öffnungen zum Durchlaß nach vorne und nach hinten abgestrahltem Licht auf, so daß die Lichtquelle in erster Linie als Stand- oder Parkleuchte dienen kann. Die Unterseite des Türgriffes ist dabei im Bereich der Lichtquelle aus durchsichtigem Material, so daß ein unterhalb der Lichtquelle und dem Türgriff angeordnetes Türschloß mitbeleuchtet werden kann. Die Lichtstärke reicht aber nicht aus, um bis zu dem Vorfeld des entsprechenden Fahrzeugteiles zu reichen. Ungünstig ist dabei einerseits, daß der Türgriff selbst zur Aufnahme der Lichtquelle dienen muß und dazu einen Fußabschnitt benötigt, der wegen der Aufnahme der Lichtquelle großvolumig ausgebildet sein muß.

Aus DE 36 35 471 A1 ist eine Vorrichtung zur Beleuchtung eines Vorfeldes eines Fahrzeugteiles bekannt, die eine Lichtquelle in einem Außenspiegelhalter derart vorsieht, daß das Vorfeld einer Fahrzeugtüre beleuchtet werden kann. Die Lichtquelle sendet ein im wesentlichen sich in Längsrichtung des Fahrzeuges erstreckendes Lichtbündel aus. Sie ist gleichzeitig mit der Entriegelung einer Zentralverriegelungseinrichtung des Fahrzeuges über eine Fernbedienung einschaltbar. Durch die Anordnung in einem Außenspiegelhalter wird einerseits die dort vorhandene Fläche für den Außenspiegel vermindert und darüberhinaus ergibt sich eine relativ große Entfernung zu dem auszuleuchtenden Bodenbereich, so daß die Lichtquelle eine entsprechend große Leuchtstärke aufweisen muß. Somit ist eine relativ großflächige und sichtbare Lichtaustrittsfläche erforderlich, um eine ausreichende Ausleuchtung eines Vorfeldes einschließlich Fahrbahnbelag zu erlauben.

Es wurde auch schon eine Vorrichtung der gattungsgemäßen Art vorgeschlagen, bei welcher der Durchlaß für das Licht in dem oberen Bereich der Griffmulde vorgesehen ist, der aufgrund der Muldenform gegen die Fahrbahn hinweist, so daß eine von dort her erfolgende Lichtabstrahlung auf das Vorfeld vor dem Fahrzeugteil erfolgt, da es diese Griffmulde aufweist. Dies ist jedoch nur dann möglich, wenn der Türgriff oberhalb dieses Durchlasses für das Licht gelagert und angeordnet ist. Mit einer solchen Anordnung und Vorrichtung ist jedoch das Vorfeld eines Fahrzeugteiles, insbesondere einer Fahrzeugtüre nicht zufriedenstellend ausleuchtbar, wenn ein etwa durch die Mulde verlaufender horizontaler Türgriff vorgesehen ist, der beispielsweise um eine vertikale Schwenkachse in horizontaler Richtung zum Öffnen der der Türe aus der Griffmulde ausschwenkbar ist oder gar in der Griffmulde feststeht, weil ein Licht-Durchlaß in dem abwärtsweisenden Muldenteil notgedrungen oberhalb dieses Griffes angeordnet wäre, so daß das abgestrahlte Licht zumindest teilweise durch den Türgriff abgeschirmt würde.

Es besteht deshalb die Aufgabe, eine Vorrichtung oder Anordnung der Eingangs genannten Art zu schaffen, mit welcher das Vorfeld eines Fahrzeugteiles oder einer Fahrzeugtüre gut ausgeleuchtet werden kann, selbst wenn in einer an dem Fahrzeugteil angeordneten Griffmulde ein in Ruhestellung horizontal verlaufender Türgriff angeordnet ist.

Zur Lösung dieser Aufgabe dienen die Merkmale des Anspruchs 1.

Die Vertiefung der Mulde wird also bereichsweise durch eine Erhöhung zummindest teilweise aufgehoben, welche Erhöhung auch als Anschlag oder Halterung für ein Ende des Türgrifffes dienen kann, so daß sie eine zusätzliche Funktion erhält. Eine solche Erhöhung innerhalb der Griffmulde hat zwangsläufig Begrenzungsflächen, deren untere aufgrund des Anstieges dieser Erhöhung gegenüber der Griffmulde derart geneigt oder schräg gestellt ist, daß sie gegen die Fahrbahn hin - wenn auch unter einem Winkel - geneigt ist. Durch die Anordnung des Durchlasses für das Licht in diesem Bereich tritt das Licht automatisch unterhalb dem Türgriff aus, unabhänig davon, wie dieser gestaltet ist und ob er horizontal durch die Griffmulde verläuft oder eventuell auch an deren oberem Rand um eine horizontale Achse schwenkbar angeordnet ist. Auf jeden Fall wird dadurch ausgeschlossen, daß der Türgriff den Lichtstrahl schneidet, der von diesem Durchlaß abgeben wird.

Besonders günstig ist es dabei, wenn die Erhöhung einen Teilbereich der Mulde ausfüllt und in diesem Teilbereich über den Muldenrand insbesondere gewölbt übersteht und der Durchlaß an der in Gebrauchsstellung unteren Seite der Wölbung angeordnet ist. Bei einer Griffmulde an einem Fahrzeugteil, insbesondere an einer Fahrzeugtüre befindet sich der Rand dieser Mulde in einer abwärtsgerichteten oder vertikalen Ebene, so daß eine gegenüber diesem Rand gewölbte Erhöhung in dem unteren Bereich oder der unteren Hälfte dieser Wölbung zu der Fahrzeugaußenhaut hin zurückspringt und also die geneigte Stelle ergibt, die aufgrund ihrer Neigung zumindest schräg gegen den zu beleuchtenden Bereich gewandt ist. Gleichzeitig ist eine solche Stelle einer Wölbung zumindest bei einer gleichmäßigen Wölbung unterhalb von deren Mitte und somit auch unterhalb eines durch die Mitte der Griffmulde bis über die Erhöhung verlaufenden Griffes angeordnet und kann durch diesen Griff nicht nach unten hin abgeschirmt werden.

Besonders günstig ist es dabei, wenn die Erhöhung innerhalb der Griffmulde als Halterung oder Widerlager oder Anschlag für das freie Ende des starr angeordneten oder um eine vertikale oder um eine vertikale oder horizontale Achse verschwenkbaren und/oder herausziehbaren oder klappbaren Griffes mit Abstand zu der eventuellen Schwenkachse dieses Griffes und/oder außermittig oder exzentrisch in der Griffmulde angeordnet ist und der Durchlaß der Anlage- oder Anschlagfläche der Erhöhung benachbart, insbesondere tiefer als diese Anschlagfläche für den Griff angeordnet ist. Somit kann die Erhöhung einerseits gut ihre Funktion als Halterung oder Widerlager für den Handgriff erfüllen und bietet dennoch eine günstige Stelle für den Durchlaß für das Licht, ohne daß dieses durch den Griff abgeschirmt werden kann.

Ausgestaltungen der Vorrichtung betreffend dem Strahlengang des Lichtes vor dem Durchlaß, sowie der Anordnung eines Lichtleiters innerhalb des öffenbaren Fahrzeugteiles und auch seiner Formgebung für einen günstigen Strahlengang oder auch ein Zusammenwirken des Lichtleiters mit einem Spiegel sind Gegenstand der Ansprüche 4 bis 10.

Anspruch 4 enthält dabei ein Merkmal, das mit der Anordnung des Durchlasses selbst an einer gegen den Boden hin gerichteten Fläche für einen günstigen Lichtaustritt gut zusammenpaßt.

Anspruch 5 enthält eine Möglichkeit, wie der Lichtleiter innerhalb des öffenbaren Fahrzeugteiles oder der Fahrzeugtüre verlaufen und mit einer Krümmung versehen sein kann, damit sein Endbereich widerum schräg nach unten gerichtet ist und so mit dem seinerseits nach unten weisenden Durchlaß für das Licht gut zusammenwirken kann.

Die Maßnahme gemäß Anspruch 6 ermöglicht eine zweckmäßige Lichtleitung innerhalb des Lichtleiters in einer Form, durch die horizontal austretende Lichtstrahlen vermieden werden, so daß bei eingeschalteter Beleuchtung im wesentlichen nur das Vorfeld des Fahrzeugteiles beleuchtet wird und Blendungen nach der Seite hin vermieden werden. Es ergeben sich durch die Maßnahmen des Anspruches 6 innerhalb des Lichtleiters durch entsprechende Reflektionen der Strahlen nur solche Strahlen, die entweder von dem Gehäuse des Lichtleiters geschluckt oder aber an der Lichtaustrittsstelle und dem Durchlaß weitesgehend nach unten abgestrahlt werden.

Anspruch 7 enthält eine Maßnahme, durch die die von dem Lichtleiter geführten und geleiteten Lichtstrahlen im wesentlichen schon durch den Lichtleiter selbst abwärts gerichtet werden.

Anspruch 8 enthält eine Möglichkeit, den Lichtleiter mit einem Spiegel zu kombinieren, um das zugeführte Licht in die gewünschte Richtung auf das Vorfeld des öffenbaren Fahrzeugteiles umzulenken.

Anspruch 9 enthält eine Ausgestaltung dahingehend, daß der Lichtleiter selbst den Spiegel aufweist beziehungsweise mit einer Spiegelfläche zum umlenken des Lichtes aus das Vorfeld ausgestattet ist.

Anspruch 10 enthält eine Maßnahme, wie der Durchlaß für das Licht gegen das Eindringen von Verunreinigungen und Feuchtigkeit mit Hilfe eines Verschlusses geschützt werden kann, der dabei zwar gegenüber der Erhöhung überstehen könnte, zweckmäßigerweise aber an deren Oberfläche angepaßt und mit ihr bündig sein kann.

Eine besonders vorteilhafte und zweckmäßige Ausgestaltung der Erfindung kann darin bestehen, daß der Lichtleiter wenigstens eine lichtleitende Abzweigung und die Griffmulde oder die in oder an der Griffmulde befindliche Erhöhung wenigstens einen zweiten Durchlaß als Lichtaustrittsfläche für die lichtleitende Abzweigung hat, die den Griff und/oder wenigstens einen Teil der Griffmulde beleuchtet. Dadurch wird es ermöglicht, nicht nur das Vorfeld des Kraftfahrzeugteiles oder der Türe, sondern auch den Griff selbst derart zu beleuchten, daß der Benutzer ihn selbst unter ungünstigsten Bedingungen in großer Dunkelheit finden kann. Wird beispielsweise die Fernbedienung für die Türentriegelung betätigt, kann die Beleuchtung eingeschaltet werden, so daß der Benutzer dann den Türgriff und auch das Vorfeld der Türe erkennt, so daß das Öffnen der Türe erleichtert wird und gleichzeitig Hindernisse oder die Gefahr von Verunreinigungen vor der Türe erkannt und vermieden werden können.

Anspruch 11 enthält eine Maßnahme zur Ausgestaltung der Beleuchtung des Türgriffes und insbesondere eine zweckmäßige Anordnung des zweiten Durchlasses.

Eine weitere Ausgestaltung der Anordnung des zweiten Durchlasses ist in Anspruch 12 angegeben und ergibt einerseits eine gute Beleuchtung des Handgriffes bei gleichzeitig andererseits einer Abschirmung des Lichtes zu dem Benutzer hin, so daß dieser durch die Beleuchtung des Türgriffes nicht geblendet wird. Dennoch ist die Griffmulde gut beleuchtet, so daß auch der Griff selbst praktisch indirekt beleuchtet wird und der Benutzer ihn auch bei tiefer Dunkelheit sofort erkennen kann. Gerade bei großer Dunkelheit ist es besonders günstig, wenn eine Blendung des Benutzers vermieden wird.

Vor allem bei Kombination einzelner oder mehrerer der vorbeschriebenen Merkmale und Maßnahmen ergibt sich ein öffenbares Fahrzeugteil mit einer Beleuchtung, die das Vorfeld dieses Fahrzeugteiles gut ausleuchten kann, ohne daß das abgegebene Licht durch den Türgriff an dieser Beleuchtungsfunktion gehindert wird, selbst wenn der Türgriff horizontal durch die Griffmulde verläuft. Dabei ist besonders günstig, daß ein Teil dieser Griffmulde eine Erhöhung aufweist beziehungsweise durch eine Erhöhung ausgefüllt ist, an der erforderlichenfalls auch noch ein zweiter Durchlaß für Licht so angeordnet werden kann, daß auch der Türgriff selbst gut erkennbar wird, ohne daß der Benutzer durch das Licht zur Beleuchtung dieses Türgriffes geblendet wird.

Nachstehend ist ein Ausführungsbeispiel der Erfindung anhand der Zeichnung näher beschrieben. Es zeigt in zum Teil schematisierter Darstellung:
- Fig. 1: in schematisierter Darstellung ein Kraftfahrzeug für Personen mit jeweils einer Vorrichtung zum Beleuchten des Vorfeldes der beiden in Figur 1 sichtbaren Fahrzeugtüren mit Hilfe einer auf der Innenseite der Fahrzeughaut angeordneten Lichtquelle, die über einen Lichtleiter mit einem Lichtauskoppelelement im Bereich der Türgriffe jeweils verbunden ist,
- Fig. 2: in schematisierter Darstellung einen Querschnitt durch das die Außenhaut des Fahrzeuges im Bereich einer öffenbaren Türe bildenden Bleches mit dem Griff und dem vom Griffbereich ausgehenden Lichtkegel zur Beleuchtung des Vorfeldes,
- Fig. 3: in vergrößertem Maßstab eine schaubildliche Ansicht einer an den Fahrzeugtüren jeweils vorgesehenen Griffmulde mit einem etwa in horizontaler Richtung über diese Griffmulde verlaufenden Türgriff, wobei die Griffmulde innerhalb des sie umgrenzenden Randes eine den Rand überragende Erhöhung mit einer Aussparung für das Ende des Türgriffes aufweist, wodurch die Erhöhung in einen oberen und einen unteren Teil unterteilt wird,
- Fig. 4: eine Ansicht der Griffmulde mit ihrer Erhöhung und dem etwa durch die horizontale Mitte dieser Griffmulde verlaufenden und in der Aussparung der Erhöhung ruhenden Handgriff, wobei in dieser Ansicht mehrere Schnittlinien angegeben sind,
- Fig. 5: einen Querschnitt gemäß der Linie A-A in Figur 4 durch die Erhöhung der Griffmulde und ihre Aussparung für das Ende des Griffes, wobei mit unterbrochenen Linien auch die Kontur der Griffmulde etwa im Bereich der Schnittlinie B-B und die Fläche angedeutet sind, innerhalb welcher der auch die Erhöhung umfassende Rand der Griffmulde umläuft,
- Fig. 6: einen Querschnitt der Griffmulde und des Türgriffes gemäß der Linie B-B in Figur 4,
- Fig. 7: einen Horizontalschnitt durch die Griffmulde und den Türgriff gemäß der Schnittlinie C-C in Figur 4 und
- Fig. 8: einen Horizontalschnitt parallel zu dem der Figur 7 gemäß der Schnittlinie D-D, der tiefer als der Schnitt C-C und unterhalb des Türgriffes im Bereich eines eine Abzweigung aufweisenden Lichtauskoppelelementes verläuft,
- Fig. 9: einen Schnitt gemäß der Linie A-A in Figur 4 durch ein abgewandeltes Ausführungsbeispiel, bei welchem das von einem Lichtleiter oder einer Lichtquelle abgegebene Licht schräg von unten gegen einen Spiegel gerichtet ist, von welchem es zu dem Durchlaß und damit zu dem Vorfeld reflektiert wird, sowie
- Fig. 10: wiederum einen Schnitt gemäß der Linie A-A in Figur 4 einer anderen Ausführungsform, bei welcher das Licht oder der Lichtleiter schräg von oben her unmittelbar auf den Durchlaß und eine dort vorhandene Lichtscheibe etwa unter dem Austrittswinkel aus dem Durchlaß gerichtet ist.

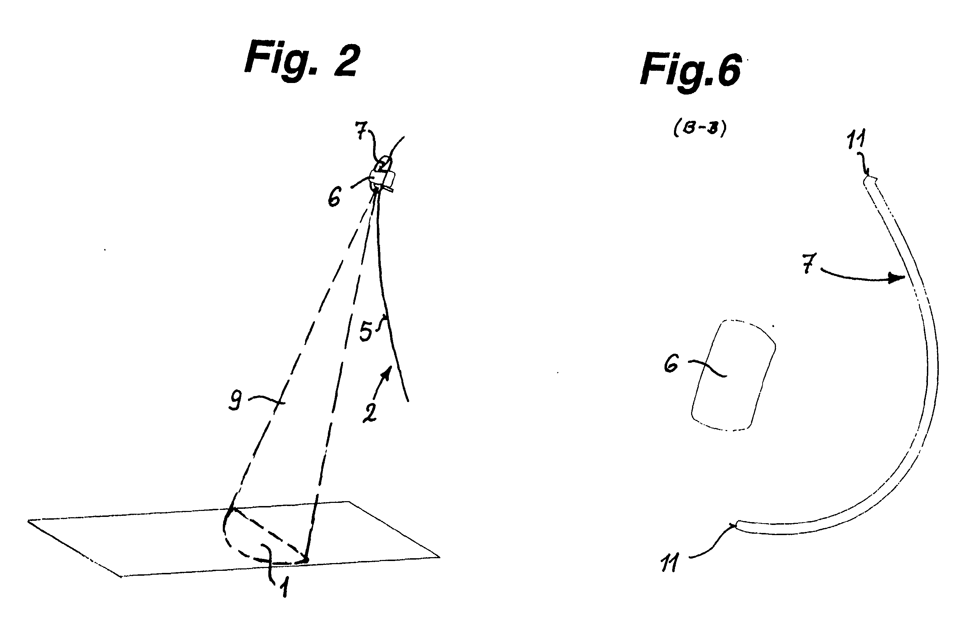

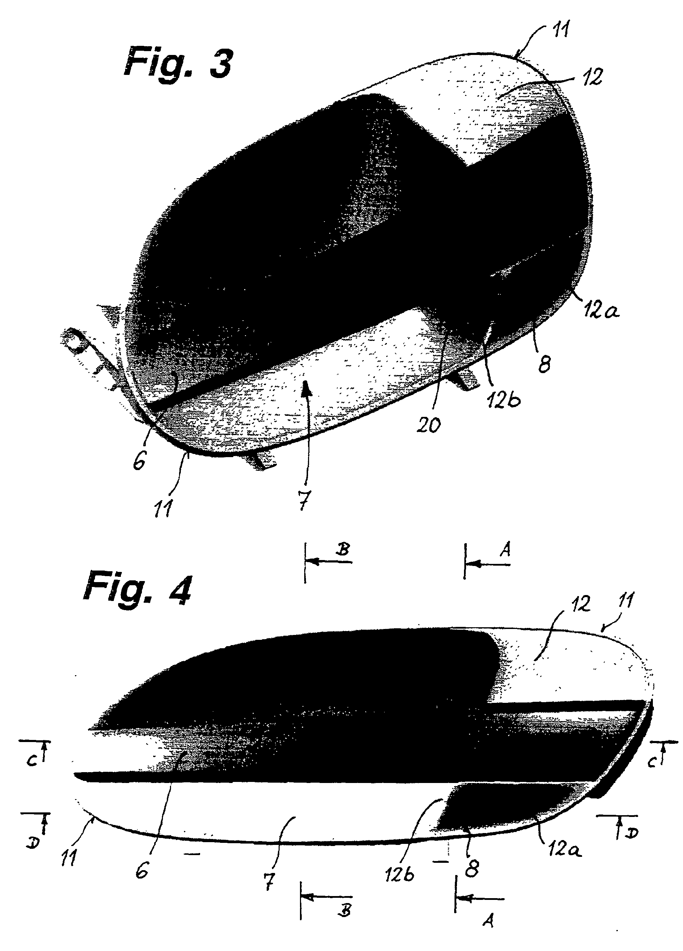

Zum Beleuchten eines Vorfeldes 1, eines öffenbaren Fahrzeugteiles, im Ausführungsbeispiel zweier Fahrzeugtüren 2 eines Fahrzeuges 3 zur Beförderung von Personen dient eine Vorrichtung, die eine nicht näher dargestellte Lichtquelle und einen Lichtleiter aufweist, womit das Licht zu einem Lichtauskoppelelement 4 geleitet wird, welches im wesentlichen auf der Innenseite der in Figur 2 und 4 angedeuteten Fahrzeugaußenhaut 5 angeordnet ist, welche Fahrzeughaut 5 von dem äußeren Blech der Fahrzeugtüre 2 gebildet wird.

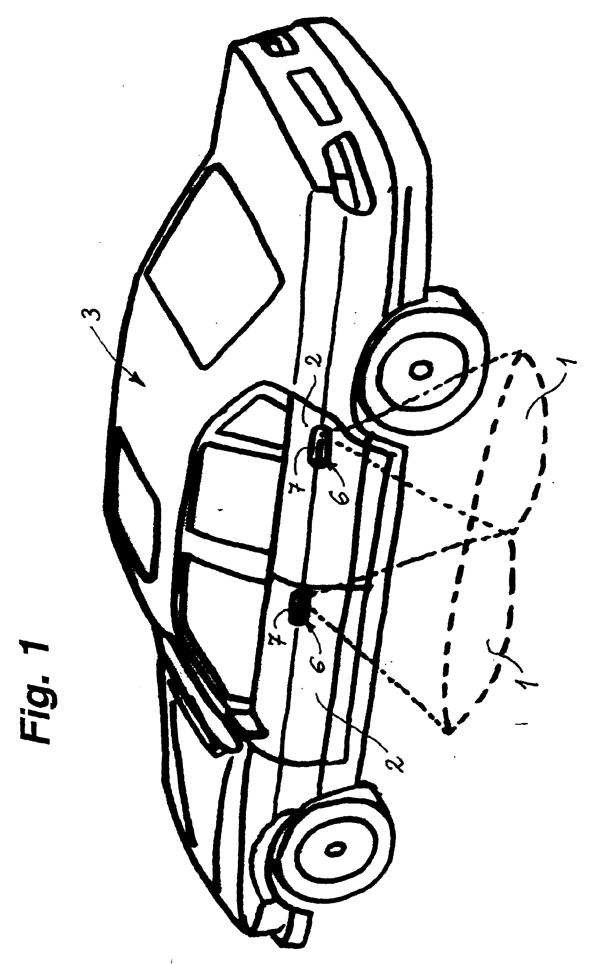

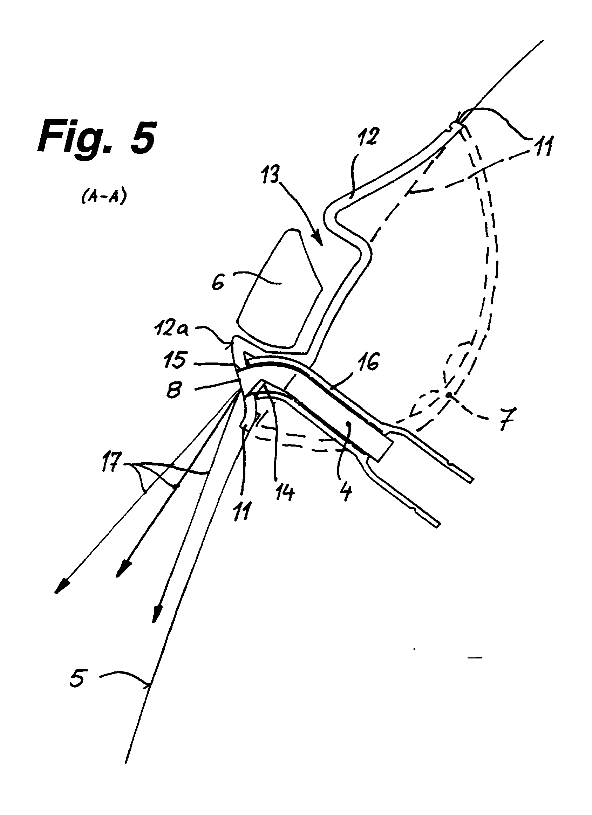

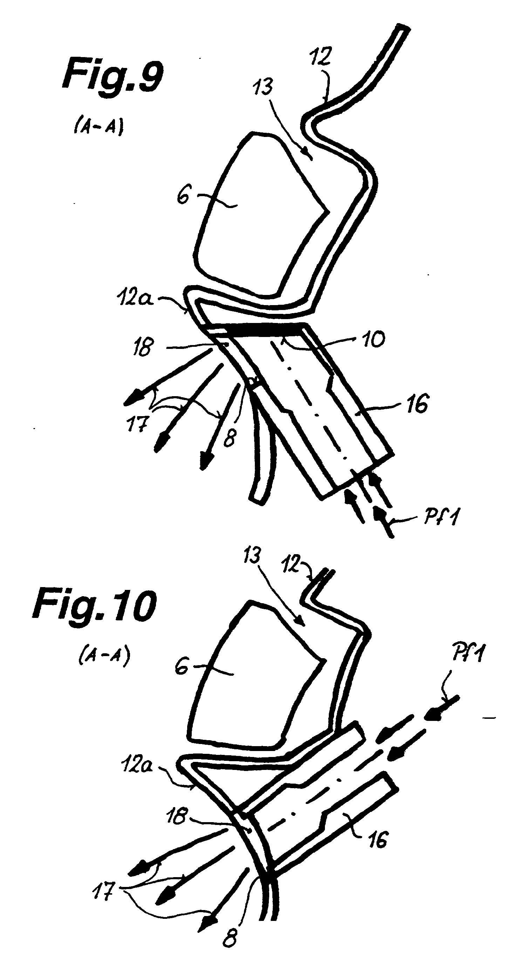

In den Figuren 1 und 2 ist angedeutet und in den weiteren Figuren näher dargestellt, daß dabei im Bereich eines zum Öffnen des Fahrzeugteiles oder der Fahrzeugtüre 2 dienenden Griffes oder Türgriffes 6, welcher gemäß Figur 3 bis 7 über eine konkave, in die Fahrzeugaußenhaut 5 eingefügte Griffmulde 7 etwa horizontal verläuft, ein Durchlaß 8 nach außen vorgesehen ist und der Endabschnitt des Lichtauskoppelelementes 4 direkt oder indirekt mit diesem Durchlaß 8 derart zusammenwirkt, daß wenigstens ein Teil der Lichtstrahlen 9 in Richtung des Bodens vor dem Fahrzeugteil 2 auf das zu beleuchtende Vorfeld 1 abgestrahlt wird, wie es in Figur 1 und 2 und auch in Figur 5 sowie ferner in Figur 9 und 10 angedeutet ist.

Dabei sei an dieser Stelle erwähnt, daß bei den Ausführungsbeispielen gemäß Figur 9 und 10 das Lichtauskoppelelement als solches nicht dargestellt oder aber als Gehäuse 16 ausgebildet ist und das gemäß den Pfeilen Pf1 zugeführte Licht über eine Reflektionsfläche oder einen Spiegel 10 zu dem und durch den Durchlaß 8 gelenkt wird, wie es Figur 9 zeigt oder schon in der Abstrahlrichtung zu dem Durchlaß 8 strahlt, wie es Figur 10 zeigt.

Für alle Ausführungsbeispiele ist wesentlich, daß die Griffmulde 7 innerhalb ihres konkaven Verlaufes und innerhalb ihres bereichsweise gekrümmt umlaufenden Begrenzungsrandes 11 eine gegenüber der von ihr gebildeten Vertiefung vorstehende Erhöhung 12 hat, die in diesem Ausführungsbeispiel in Fahrtrichtung im hinteren Drittel der Griffmulde 7 angeordnet ist und die Griffmulde 7 in diesem Bereich nicht nur bis zu dem Rand 11 hin ausfüllt, sondern gemäß Figur 5 sogar noch etwas darüber vorsteht. Die Oberseite dieser Erhöhung 12 ist also etwa konvex gewölbt und hat in ihrem mittleren Bereich eine Aussparung 13, in die ein Ende des Türgriffes 6 paßt, was in den Figuren 3 bis 5 sowie 9 und 10 angedeutet ist. Die Erhöhung 12 dient also zur Aufnahme und Lagerung des Türgriffes 6 in einer Weise, daß keine absatzartig überstehenden Teile oder Bereiche gebildet werden.

Dies wird bei der Vorrichtung zum Beleuchten des Vorfeldes 1 dazu ausgenutzt, daß der schon erwähnte Durchlaß 8 für das Licht an einer geneigten Stelle 12a der Erhöhung 12 angeordnet wird, die aufgrund ihrer Neigung dem zu beleuchtenden Boden und dem Vorfeld 1 zugewandt ist. Durch die Wölbung der Erhöhung 12 über die von dem umlaufenden Rand 11 gebildeten Ebene der Griffmulde 7 hinaus ist dabei der untere Bereich, der sich unterhalb der Aussparung 13 befindet, in der geeigneten Weise geneigt, wie es besonders gut in Figur 5 erkennbar ist. Der Durchlaß 8 ist also in Gebrauchsstellung an der unteren Seite der Wölbung der Erhöhung 12 angeordnet, so daß durch diesen Durchlaß 8 fallendes Licht ungehindert insbesondere nach unten abgestrahlt werden kann, ohne durch den Türgriff 6 in irgendeiner Weise daran gehindert zu werden.

Die Erhöhung 12 innerhalb der Griffmulde 7 hat also mehrere Funktionen, indem sie als Halterung oder Widerlager oder Anschlag für das freie Ende des Griffes 6 dient und außerdem an einer für die Beleuchtung des Vorfeldes 1 günstigen Stelle den Durchlaß 8 für das Licht aufweist, wobei ausgenutzt wird, daß die unterhalb dem Türgriff 6 befindliche Stelle 12a dieser Erhöhung 12 so geneigt ist, daß der dort vorhandene Licht-Durchlaß 8 schräg nach unten zu dem Vorfeld 1 weist.

Denkbar wäre aber natürlich auch, nur den unterhalb des Handgriffes 6 befindlichen Teil der Erhöhung 12 mit der geneigten Stelle 12a vorzusehen oder die Erhöhung 12 innerhalb der Griffmulde 7 und insbesondere im Randbereich der Griffmulde 7 anders zu formen und zu gestalten, um einen Durchlaß 8 zu ermöglichen, durch welchen das von einer Lichtquelle kommende Licht schräg nach unten auf das Vorfeld 1 abgeben zu können.

Gemäß den Figuren 5, 9 und 10 ist der Strahlengang des Lichtes vor dem Durchlaß 8 unter einem spitzen Winkel gegenüber einer horizontalen Ebene abwärts auf den Durchlaß 8 gerichtet, so daß die den Durchlaß 8 verlassenden Strahlen jeweils das Vorfeld 1 nahe einer Fahrzeugtüre 2 erreichen. Dabei wird dies in den verschiedenen Ausführungsbeispielen auf unterschiedliche Weise realisiert.

In Figur 5 ist die Anordnung so gewählt, daß der Lichtleiter innerhalb des öffenbaren Fahrzeugteiles oder der Fahrzeugtüre 2 etwa horizontal oder, wie zeichnerisch dargestellt, schräg ansteigend verläuft und in der Nähe des Durchlasses 8 und damit der Lichtaustrittsstelle derart gekrümmt ist, daß sein Endbereich schräg nach unten gerichtet ist. Dabei ist von dem gesamten Lichtleiter in Figur 4 nur das Lichtauskoppelelement 4 dargestellt, welches mit der Lichtquelle über einen weiteren Lichtleiter verbunden ist.

Gemäß Figur 5 ist an der Unterseite des Lichtleiters oder Lichtauskoppelelementes 4 benachbart zu dem Durchlaß 8 eine Kerbe oder Einbuchtung 14 vorgesehen, die von unten her in den Lichtleiter oder das Lichtauskoppelelement 4 eingreift und seinen Querschnitt bis zu einer in Gebrauchsstellung höchsten Stelle dieser Kerbe oder Einbuchtung 14 vermindert. Eine durch diese höchste Stelle verlaufende gedachte horizontale Ebene berührt dabei die oberste Begrenzung 15 des Durchlasses 8 für den Lichtaustritt oder schneidet sie, das heißt sie verläuft durch die oder etwas oberhalb der obersten Begrenzung 15 des Durchlasses 8. Dadurch wird bewirkt, daß keine durch den Lichtleiter oder das Lichtauskoppelelement 4 zugeführten und zu dem Durchlaß 8 geleiteten Strahlen etwa horizontal austreten und Blendungen verursachen können. Vielmehr werden derartige Strahlen innerhalb des Gehäuses 16 des Lichtauskoppelelementes 4 aufgefangen und es werden nur abwärts gerichtete Lichtstrahlen 17 in Richtung zu dem Vorfeld 1 abgegeben.

Figur 10 zeigt eine Lösung, bei welcher der nicht näher dargestellte Lichtleiter im Nachbarbereich des Durchlasses 8 ebenso wie das Gehäuse 16 insgesamt derart geneigt ist, daß die von ihm abgegebenen Lichtstrahlen gegenüber einer horizontalen Ebene schräg abwärts gerichtet sind und Blendungen durch horizontal oder gar nach oben gerichtete Lichtstrahlen vermieden werden.

Gemäß Figur 9 ist im Bereich des Durchlasses 8 als Lichtauskoppelelement ein Spiegel 10, also eine Reflektionsfläche, vorgesehen, worauf der Lichtleiter oder das von einer Lichtquelle in diesem Ausführungsbeispiel etwas schräg von unten und einem solchen Winkel gerichtet ist, daß der Ausfallwinkel das an dem Spiegel 10 reflektierte Licht gegenüber einer horizontalen Ebene schräg abwärts auf den Durchlaß 8 und durch diesen hindurch richtet und abgibt. Auch dadurch können horizontale oder aufwärts gerichtete Strahlen vermieden und jeweils ein Vorfeld 1 beleuchtet werden.

Figur 9 kann auch so interpretiert werden, daß der Lichtleiter oder das Lichtauskoppelelement 4 bis zu dem Durchlaß 8 reicht, also das Gehäuse 16 ausfüllt und eine den Durchlaß 8 zugewandte Fläche des Lichtleiters oder des Lichtauskoppelelementes durch Beschichtung oder Bedampfung als Spiegel 10 ausgebildet ist, die dem Durchlaß 8 oder einem lichtdurchlässigem Verschluß 18 des Durchlasses 8 mit Abstand zugewandt ist. Praktisch ist in einem solchen Falle dann die Innenhöhlung des Gehäuses 16 durch ein Lichtkoppelelement ausgefüllt, welches an dem Spiegel 10 endet, ohne daß dort ein separater Spiegel 10 vorgesehen ist. Der Spiegel 10 ist vielmehr durch Beschichtung oder Bedampfung der entsprechenden Fläche dieses Lichtauskoppelelementes 4 gebildet.

Wie bereits erwähnt, kann der Durchlaß 8 in allen Ausführungsbeispielen mit einem lichtdurchlässigen Verschluß 18, insbesondere mit einer Lichtscheibe versehen und abgedichtet sein, wobei die Kontur dieses Verschlusses 18 der Erhöhung 12 und der Stelle 12a in der Griffmulde 7 angepaßt und mit deren Oberfläche bündig sein kann, wie es in den Ausführungsbeispielen dargestellt ist. Es wäre aber auch möglich, diesen Verschluß 18 geringfügig überstehend zu gestalten, in dem Sinne, daß er dazu beiträgt, die Lichtstrahlen 17 noch etwas stärker abwärts umzulenken.

Vorstehend wurde mehrfach das Lichtauskoppelelement 4 erwähnt, welches ein eigenständiger Lichtleiter sein kann, dem das Licht direkt oder über einen weiteren Lichtleiter zugeführt werden kann, welches aber gegebenenfalls auch das Ende eines von der Lichtquelle kommenden Lichtleiters sein könnte.

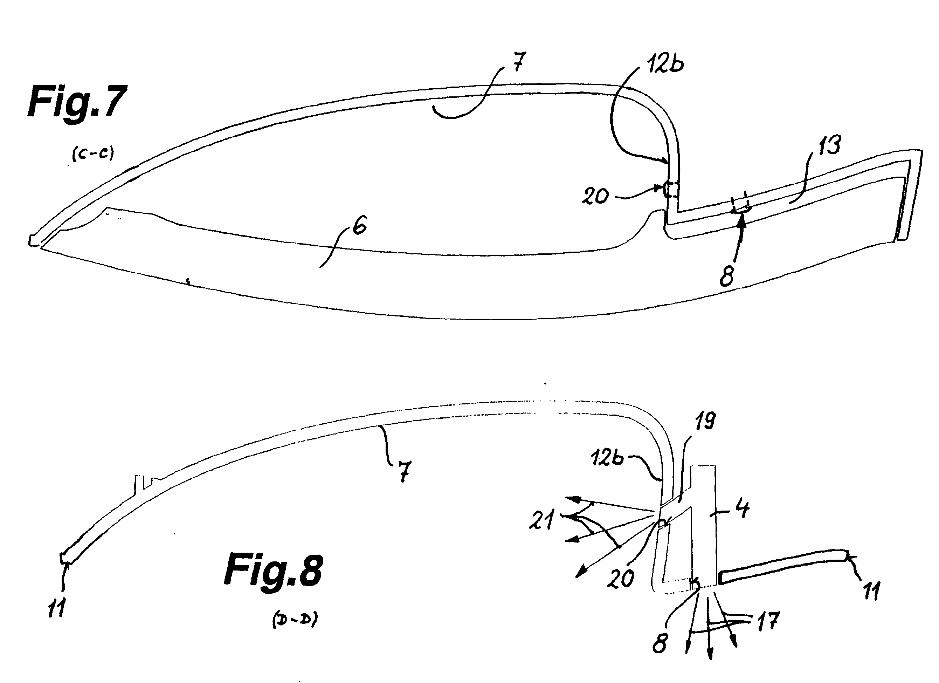

In Figur 8 ist dargestellt, daß dieses Lichtauskoppelelement 4 oder der entsprechende Lichtleiter eine lichtleitende Abzweigung 19 aufweisen kann und gemäß Figur 8 in Verbindung mit Figur 3 ist dargestellt, daß die Griffmulde 7 und in diesem Falle die in der Griffmulde 7 befindliche Erhöhung 12 an ihrem unter dem Griff 6 befindlichen Bereich einen zweiten Durchlaß 20 als Lichtaustrittsfläche für die lichtleitende Abzweigung 19 hat, die den Griff 6 und wenigstens einen Teil der Griffmulde 7 beleuchtet. Man erkennt vor allem in Figur 3, aber auch in Figur 8, wie dieser zweite Durchlaß 20 und die zu ihm führende lichtleitende Abzweigung 19 an einer aus der Griffmulde 7 ansteigenden Seitenfläche 12b der Erhöhung 12 angeordnet ist.

Dabei ist der zweite Durchlaß 20 für den Lichtaustritt der Abzweigung 19 nahe dem ersten Durchlaß 8 an einer Stelle der Erhöhung 12 der Mulde 7 angeordnet, die so geneigt ist, daß das austretende Licht etwa in Fahrtrichtung oder unter spitzem Winkel zu der Fahrtrichtung des Fahrzeuges 3 und damit schräg gegen die Unterseite und gegebenenfalls auch die Rückseite des Griffes 6 und teilweise auch in die Griffmulde 7 selbst gerichtet ist. Dies wird durch die Strahlen 21 in Figur 8 angedeutet.

Figur 3 verdeutlicht gleichzeitig, daß der zweite als Lichtaustrittsfläche dienende Durchlaß 20 unter einer an der Unterseite des Griffes 6 in dessen Ruhestellung horizontal verlaufenden Ebene in derart angeordnet ist, daß dieser zweite Durchlaß 20 durch den Griff 6 in dessen Ruhestellung gegen einen Benutzer hin, also zumindest schräg nach oben abgeschirmt ist. Gleichzeitig kann dabei dieser Durchlaß 20 hinter einer an der Rückseite des Griffes 6 vertikal verlaufenden Ebene etwa auf der Höhe des Griffes 6 oder gegebenenfalls auch etwas darunter angeordnet sein, um auch eine Abschirmung des aus ihm austretenden Lichtes in horizontaler Richtung zu bewirken.

Da das Licht von den Durchlässen 8 und 20 jeweils abgegeben wird, wenn sich der Benutzer vor der entsprechenden Fahrzeugtüre 2 befindet, werden auch von ihm selbst solche Strahlen abgeschirmt, die eventuell in unerwünschter Richtung austreten könnten. In jedem Falle kann beispielsweise durch die Fernbedienung zum Entriegeln des Fahrzeuges die Beleuchtung des Vorfeldes 1 und des Griffes 6 mit der Griffmulde 7 eingeschaltet werden, so daß ein Benutzer vor der Fahrzeugtüre 2 befindliche Hindernisse oder Verschmutzungen gut erkennen und vermeiden und den Türgriff sicher erfassen kann, selbst wenn das Fahrzeug an einem völlig unbeleuchtetem Ort abgestellt ist. Gleichzeitig kann der Benutzer sein Fahrzeug 3 auf die Entfernung hin durch das Einschalten der Beleuchtung gut finden, über welche seine Fernbedienung wirksam ist. Da die Durchlässe 8 und 20 unter beziehungsweise etwas in die Mulde zurückversetzt hinter dem Türgriff 6 angeordnet sind, wird das austretende Licht nicht durch den Türgriff selbst vor allem gegenüber dem zu beleuchtenden Vorfeld 1 abgeschirmt.

Die Vorrichtung zum Beleuchten eines Vorfeldes 1 eines öffenbaren Fahrzeugteiles, insbesondere einer Fahrzeugtüre 2, gegebenenfalls aber auch eines Kofferraumdeckels oder einer Heckklappe, weist eine Lichtquelle und einen Lichtleiter mit einem Lichtauskoppelelement 4 auf, mit welchem der Lichtleiter zusammenwirkt oder gegebenenfalls sogar einstückig verbunden sein kann. Dabei ist im Bereich eines zum Öffnen des Fahrzeugteiles 2 dienenden Griffes 6 an einer konkaven Griffmulde 7 zumindest ein Durchlaß 8 für das Licht vorgesehen. Die Griffmulde 7 hat innerhalb ihres konkaven Verlaufes eine gegenüber der von ihr gebildeten Vertiefung hochstehende oder vorstehende Erhöhung 12 beziehungsweise eine Erhöhung 12 kann unter Umständen auch der Griffmulde 7 unmittelbar benachbart sein und der Durchlaß 8 für das Licht ist an einer geneigten Stelle 12a dieser Erhöhung 12 angeordnet, die aufgrund ihrer Neigung dem zu beleuchtenden Boden und dem Vorfeld 1 zugewandt ist.

## Patentansprüche

1. Vorrichtung zum Beleuchten eines Vorfeldes (1) eines öffenbaren Fahrzeugteiles, insbesondere einer Fahrzeugtüre (2), mit einer Lichtquelle, die über einen Lichtleiter mit einem Lichtauskoppelelement (4) verbunden ist, welches im wesentlichen auf der Innenseite der Fahrzeugaußenhaut (5) angeordnet ist, wobei im Bereich eines zum Öffnen des Fahrzeugteiles (2) dienenden Griffes, insbesondere im Bereich eines Türgriffes (6), welcher Bereich als konkave Griffmulde (7) ausgebildet ist, ein Durchlaß (8) nach außen vorgesehen ist und wobei ein Endabschnitt des Lichtauskoppelelementes (4) mit dem Durchlaß (8) derart zusammenwirkt, daß wenigstens ein Teil der Lichtstrahlen (9) in Richtung des Bodens vor dem Fahrzeugteil (2), insbesondere vor der Fahrzeugtüre, abgestrahlt wird, **dadurch gekennzeichnet, daß** die Griffmulde (7) innerhalb ihres konkaven Verlaufes wenigstens eine gegenüber der von ihr gebildeten Vertiefung vorstehende Erhöhung (12) hat und daß der Durchlaß (8) für das Licht an einer geneigten Stelle (12a) dieser Erhöhung (12) angeordnet ist, die aufgrund ihrer Neigung dem zu beleuchtenden Boden zugewandt ist.

2. Vorrichtung nach Anspruch 1, **dadurch gekennzeichnet, daß** die Erhöhung (12) einen Teilbereich der Griffmulde (7) ausfüllt und in diesem Teilbereich über den Muldenrand (11) gewölbt übersteht und daß der Durchlaß (8) an der in Gebrauchsstellung unteren Seite (12a) der Wölbung angeordnet ist.

3. Vorrichtung nach Anspruch 1 oder 2, **dadurch gekennzeichnet, daß** die Erhöhung innerhalb der Griffmulde (7) als Halterung oder Widerlager oder Anschlag für das freie Ende des starr angeordneten oder um eine vertikale oder horizontale Achse verschwenkbaren und/oder herausziehbaren oder klappbaren Griffes (6) mit Abstand zu der eventuellen Schwenkachse dieses Griffes und/oder außermittig oder exzentrisch in der Griffmulde (7) angeordnet ist und der Durchlaß der Anlage- oder Anschlagfläche der Erhöhung (12) benachbart ist, insbesondere tiefer als diese Anlagefläche angeordnet ist.

4. Vorrichtung nach einem der Ansprüche 1 bis 3, **dadurch gekennzeichnet, daß** der Strahlengang des Lichtes vor dem Durchlaß (8) unter einem spitzen Winkel gegenüber einer horizontalen Ebene abwärts auf den Durchlaß (8) gerichtet ist.

5. Vorrichtung nach einem der Ansprüche 1 bis 4, **dadurch gekennzeichnet, daß** der Lichtleiter innerhalb des öffenbaren Fahrzeugteiles (2) oder der Fahrzeugtüre (2) etwa horizontal oder schräg ansteigend verläuft und in der Nähe des Durchlasses (8) und der Lichtaustrittsstelle derart gekrümmt ist, daß sein Endbereich schräg nach unten gerichtet ist.

6. Vorrichtung nach einem der Ansprüche 1 bis 5, **dadurch gekennzeichnet, daß** an der Unterseite des Lichtleiters oder Lichtauskopplungselementes (4) benachbart zu dem Durchlaß (8) eine Kerbe oder Einbuchtung (14) vorgesehen ist, die von unten her in den Lichtleiter oder das Lichtauskoppelelement (4) eingreift und seinen Querschnitt bis zu einer in Gebrauchsstellung höchsten Stelle dieser Kerbe oder Einbuchtung (14) vermindert, und daß eine durch diese höchste Stellung verlaufende horizontale Ebene die oberste Begrenzung (8) des Durchlasses (8) für den Lichtaustritt berührt oder schneidet, das heißt, durch die oder etwas oberhalb der obersten Begrenzung (15) des Durchlasses (8) verläuft.

7. Vorrichtung nach einem der Ansprüche 1 bis 6, **dadurch gekennzeichnet, daß** der Lichtleiter im Nachbarbereich des Durchlasses (8) insgesamt derart geneigt ist, daß wenigstens ein Teil der von ihm geführten und abgegebenen Lichtstrahlen gegenüber einer horizontalen Ebene schräg abwärts gerichtet ist.

8. Vorrichtung nach einem der Ansprüche 1 bis 7, **dadurch gekennzeichnet, daß** im Bereich des Durchlasses (8) ein Spiegel (10) vorgesehen ist, auf welchen der Lichtleiter, das Lichtauskoppelelement (4) oder das von einer Lichtquelle kommende Licht insbesondere etwas schräg von unten unter einem solchen Winkel gerichtet ist, daß der Ausfallwinkel das an dem Spiegel (10) reflektierte Licht gegenüber einer horizontalen Ebene schräg abwärts auf den Durchlaß (8) richtet.

9. Vorrichtung nach einem der Ansprüche 1 bis 8, **dadurch gekennzeichnet, daß** der Lichtleiter oder das Lichtauskoppelelement (4) bis zu dem Durchlaß reicht und eine dem Durchlaß (8) zugewandte Fläche durch Beschichtung oder Bedampfung als Spiegel ausgebildet ist, die dem Durchlaß (8) oder dem lichtdurchlässigen Verschluß (18) des Durchlasses (8) mit Abstand zugewandt ist.

10. Vorrichtung nach einem der Ansprüche 1 bis 9, **dadurch gekennzeichnet, daß** der Durchlaß (8) mit einem lichtdurchlässigen Verschluß (18) versehen und/oder abgedichtet ist, der der Kontur der Erhöhung (12) in der Griffmulde (7) angepaßt und mit deren Oberfläche bündig sein kann.

11. Vorrichtung nach einem der Ansprüche 1 bis 10, **dadurch gekennzeichnet, daß** der Lichtleiter oder das Lichtauskoppelelement (4) wenigstens eine lichtleitende Abzweigung (19) und die Griffmulde (7) oder die in oder an der Griffmulde (7) befindliche Erhöhung (12) wenigstens einen zweiten Durchlaß (20) als Lichtaustrittsfläche für die lichtleitende Abzweigung (19) hat, die den Griff (6) und/oder wenigstens einen Teil der Griffmulde (7) beleuchtet.

12. Vorrichtung nach Anspruch 11, **dadurch gekennzeichnet, daß** der zweite Durchlaß (20) für den Lichtaustritt der lichtleitenden Abzweigung (19) nahe dem ersten Durchlaß (8) an einer Stelle der Erhöhung (12) der Mulde (7) angeordnet ist, die so geneigt ist, daß das austretende Licht etwa in Fahrtrichtung oder unter spitzem Winkel zu der Fahrtrichtung des Fahrzeuges (3) und damit schräg gegen die Unterseite und/oder die Rückseite des Griffes (6) und gegebenenfalls teilweise auch in die Griffmulde (7) gerichtet ist.

13. Vorrichtung nach Anspruch 11 oder 12, **dadurch gekennzeichnet, daß** der zweite als Lichtaustrittsfläche dienende Durchlaß (20) hinter einer an der Rückseite des Griffes (6) vertikal verlaufenden Ebene etwa auf der Höhe des Griffes (6) oder gegebenenfalls darunter und/oder unter einer an der Unterseite des Griffes (6) in dessen Ruhestellung verlaufenden Ebene insbesondere in der Art angeordnet ist, daß dieser zweite Durchlaß für das Licht durch den Griff (6) zumindest in dessen Ruhestellung zur Seite hin, also in horizontaler Richtung, und/oder nach oben hin abgeschirmt ist.

## Claims

1. Device for illuminating the area (1) in front of an openable vehicle part, particularly a vehicle door (2), having a light source which is connected through a light conductor to a light output element (4) which is arranged substantially on the inside of the outer skin (5) of the vehicle, while in the region of a handle used to open the vehicle part (2), especially in the region of a door handle (6), the area being in the form of a concave handle recess (7), an outward opening (8) is provided, and wherein an end portion of the light output element (4) cooperates with the opening (8) such that at least some of the light beam (9) is directed towards the ground in front of the vehicle part (2), particularly the vehicle door, **characterised in that** the handle recess (7) has, within its concave shape, at least one elevation (12) projecting relative to the depression formed thereby and **in that** the opening (8) for the light is arranged at an inclined position (12a) on this elevation (12) which, because of its inclined position, faces the ground which is to be illuminated.

2. Device according to claim 1, **characterised in that** the elevation (12) fills a part of the handle recess (7) and in this partial area projects in a convex arrangement over the edge (11) of the recess and **in that** the opening (8) is arranged on the lower side (12a) of the convexity, in the position of use.

3. Device according to claim 1 or 2, **characterised in that** the elevation is provided within the handle recess (7) as a mount or abutment or stop for the free end of the handle (6), which is fixedly mounted or pivotable and/or retractable or foldable about a vertical or horizontal axis, at a spacing from the possible pivot axis of this handle and/or eccentrically in the handle recess (7), and the opening is adjacent to the contact or abutment surface of the elevation (12), more particularly is arranged lower than this abutment surface.

4. Device according to one of claims 1 to 3, **characterised in that** the beam path of the light in front of the opening (8) is directed downwards onto the opening (8) at an acute angle to a horizontal plane.

5. Device according to one of claims 1 to 4, **characterised in that** the light conductor extends substantially horizontally or ascending at an angle within the openable vehicle part (2) or vehicle door (2) and is curved in the region of the opening (8) and light exit point such that its end region is directed diagonally downwards.

6. Device according to one of claims 1 to 5, **characterised in that** on the underside of the light conductor or light output element (4), adjacent to the opening (8), a notch or indentation (14) is provided which engages from below in the light conductor or the light output element (4) and reduces its cross section up to a highest point of this notch or indentation (14), in the position of use, and **in that** a horizontal plane extending through this topmost position makes contact with or intersects the uppermost limit (8) of the opening (8) for the light exit, i.e. extends through or somewhat above the topmost limit (15) of the opening (8).

7. Device according to one of claims 1 to 6, **characterised in that** the light conductor in the vicinity of the opening (8) is inclined as a whole such that at least part of the light beam guided and emitted by it is directed diagonally downwards relative to a horizontal plane.

8. Device according to one of claims 1 to 7, **characterised in that** in the region of the opening (8) a mirror (10) is provided onto which the light conductor, the light output element (4) or the light coming from a light source is directed, in particular, somewhat diagonally from below at an angle such that the angle of reflection directs the light reflected from the mirror (10) diagonally downwards onto the opening (8) relative to a horizontal plane.

9. Device according to one of claims 1 to 8, **characterised in that** the light conductor or the light output element (4) extends up to the opening and a surface facing the opening (8) is constructed by coating or vaporisation as a mirror which faces the opening (8) or the light-permeable closure (18) of the opening (8) at a spacing therefrom.

10. Device according to one of claims 1 to 9, **characterised in that** the opening (8) is provided with and/or sealed off by a light-permeable closure (18), which may be adapted to the contour of the elevation (12) in the handle recess (7) and may be flush with the surface thereof.

11. Device according to one of claims 1 to 10, **characterised in that** the light conductor or the light output element (4) has at least one light-carrying branch (19) and the handle recess (7) or the elevation (12) located in or on the handle recess (7) has at least one second opening (20) as a light exit surface for the light-carrying branch (19), which illuminates the handle (6) and/or at least part of the handle recess (7).

12. Device according to claim 11, **characterised in that** the second opening (20) for the emergence of light from the light-carrying branch (19) is arranged close to the first opening (8) at a point on the elevation (12) of the recess (7) which is inclined such that the emerging light is directed substantially in the direction of travel or at an acute angle to the direction of travel of the vehicle (3) and hence diagonally towards the underside and/or rear side of the handle (6) and optionally partially into the handle recess (7) as well.

13. Device according to claim 11 or 12, **characterised in that** the second opening (20) acting as a light exit surface is arranged behind a plane extending vertically on the rear side of the handle (6), substantially level with the handle (6) or optionally below it and/or underneath a plane extending on the underside of the handle (6) in the resting position thereof, in particular in a manner such that this second opening for the light is screened off by the handle (6), at least in its resting position, towards the side, i.e. in the horizontal direction, and/or upwards.

## Revendications

1. Dispositif d'éclairage des abords (1) d'un élément ouvrant d'un véhicule, en particulier une porte de véhicule (2), comportant une source lumineuse qui, par l'intermédiaire d'un guide d'ondes optiques, est reliée à un élément de sortie de lumière (4), qui est agencé essentiellement sur le côté intérieur d'une carrosserie extérieure (5) du véhicule, un passage (8) vers l'extérieur étant prévu dans la zone d'une poignée, destinée à ouvrir l'élément de véhicule (2), en particulier dans la zone d'une poignée de porte (6), laquelle zone est réalisée sous forme de cavité pour poignée (7), un tronçon d'extrémité de l'élément de sortie de lumière (4) coopérant avec le passage (8) de telle sorte qu'au moins une partie des rayons lumineux (9) est émise vers le sol devant l'élément de véhicule (2), en particulier devant la porte de véhicule, **caractérisé en ce que** la cavité pour poignée (7) possède à l'intérieur de sa forme concave au moins une bosse (12) en saillie par rapport au creux qu'elle forme, et **en ce que** le passage (8) pour la lumière est situé dans une zone (12a) inclinée de cette bosse (12), qui en raison de son inclinaison est orientée vers le sol à éclairer.

2. Dispositif selon la revendication 1, **caractérisé en ce que** la bosse (12) remplit une partie de la cavité pour poignée (7) et forme dans cette partie une saillie bombée au-dessus du bord (11) de la cavité et **en ce que** le passage (8) est réalisé sur la face inférieure (12a), en position de service, de cette saillie bombée.

3. Dispositif selon la revendication 1 ou 2, **caractérisé en ce que** la bosse à l'intérieur de la cavité pour poignée (7), laquelle forme un support ou un appui ou une butée pour l'extrémité libre de la poignée (6), montée rigide ou pouvant pivoter autour d'un axe vertical ou horizontal et/ou extractive ou rabattable, est disposée dans la cavité pour poignée (7) à distance de l'éventuel axe de pivotement de cette poignée et/ou de manière non centrée ou excentrée et le passage est adjacent à la surface d'appui ou de butée de la bosse (12), en particulier est agencé à une plus grande profondeur que cette surface d'appui.

4. Dispositif selon l'une quelconque des revendications 1 à 3, **caractérisé en ce que** le faisceau lumineux devant le passage (8), formant un angle aigu avec un plan horizontal, est dirigé vers le bas sur le passage (8).

5. Dispositif selon l'une quelconque des revendications 1 à 4, **caractérisé en ce que** le guide d'ondes optiques à l'intérieur de l'élément ouvrant (2) du véhicule ou de la porte du véhicule (2) s'étend sensiblement horizontalement ou en oblique vers le haut et, à proximité du passage (8) et de la zone de sortie de lumière, est incurvé de telle sorte que sa zone d'extrémité est dirigée en oblique vers le bas.

6. Dispositif selon l'une quelconque des revendications 1 à 5, **caractérisé en ce que** sur la face inférieure du guide d'ondes optiques ou de l'élément de sortie de lumière (4), à proximité du passage (8), est prévue une entaille ou encoche (14), qui s'engage par le bas dans le guide d'ondes optiques ou l'élément de sortie de lumière (4) et diminue sa section jusqu'à un emplacement de cette entaille ou encoche (14), situé au plus haut dans la position de service, et **en ce qu'**un plan horizontal, passant par cet emplacement le plus haut, entre en contact ou coupe la limite supérieure (15) du passage (8) pour la sortie de lumière, c'est-à-dire passe par ou quelque peu au-dessus de la limite supérieure (15) du passage (8).

7. Dispositif selon l'une quelconque des revendications 1 à 6, **caractérisé en ce que** le guide d'ondes optiques dans la zone à proximité du passage (8) est incliné dans l'ensemble de telle sorte qu'au moins une partie des rayons lumineux, guidés et émis par ledit guide d'ondes optiques, est dirigée en oblique vers le bas par rapport à un plan horizontal.

8. Dispositif selon l'une quelconque des revendications 1 à 7, **caractérisé en ce que** dans la zone du passage (8), il est prévu un miroir (10), sur lequel le guide d'ondes optiques, l'élément de sortie de lumière (4) ou la lumière venant d'une source lumineuse sont dirigés en particulier en étant légèrement inclinés vers le bas en formant un angle tel que l'angle d'incidence dirige la lumière, réfléchie par le miroir (10), en oblique vers le bas sur le passage (8) par rapport à un plan horizontal.

9. Dispositif selon l'une quelconque des revendications 1 à 8, **caractérisé en ce que** le guide d'ondes optiques ou l'élément de sortie de lumière (4) s'étend jusqu'au passage et une surface, orientée vers le passage (8), est réalisée sous forme de miroir par un revêtement ou une métallisation sous vide, laquelle surface est orientée à distance vers le passage (8) ou la fermeture transparente (18) du passage (8).

10. Dispositif selon l'une quelconque des revendications 1 à 9, **caractérisé en ce que** le passage (8) est muni d'une fermeture transparente (18) et/ou est rendu étanche par ladite fermeture transparente, qui est adaptée au contour de la bosse (12) dans la cavité pour poignée (7) et qui peut être située à fleur de la surface de cette dernière.

11. Dispositif selon l'une quelconque des revendications 1 à 10, **caractérisé en ce que** le guide d'ondes optiques ou l'élément de sortie de lumière (4) possède au moins une dérivation (19) de guidage de la lumière, et la cavité pour poignée (7) ou la bosse (12) située dans la cavité pour poignée (7) possède au moins un deuxième passage (20) formant une surface de sortie de lumière pour la dérivation (19) de guidage de la lumière, qui éclaire la poignée (6) et/ou au moins une partie de la cavité pour poignée (7).

12. Dispositif selon la revendication 11, **caractérisé en ce que** le deuxième passage (20) pour la sortie de la lumière de la dérivation (19) de guidage de la lumière est situé à proximité du premier passage (8) à un emplacement de la bosse (12) dans la cavité pour poignée (7), lequel est incliné de telle sorte que la lumière sortant est dirigée à peu près dans le sens de déplacement ou en formant un angle aigu avec le sens de déplacement du véhicule (3) et, de ce fait, en oblique contre la face inférieure et/ou le côté arrière de la poignée (6) et, le cas échéant, partiellement aussi dans la cavité pour poignée (7).

13. Dispositif selon la revendication 11 ou 12, **caractérisé en ce que** le deuxième passage (20) formant une surface de sortie de lumière est situé derrière un plan orienté verticalement sur le côté arrière de la poignée (6) à peu près à la hauteur de la poignée (6) ou, le cas échéant, en dessous de celle-ci et/ou en dessous d'un plan s'étendant sur la face arrière de la poignée (6), dans la position de repos de celle-ci, en particulier de telle sorte que ce deuxième passage pour la lumière est protégé vers le côté, c'est-à-dire dans la direction horizontale, et/ou vers le haut par la poignée (6) du moins dans la position de repos de celle-ci.
